# EUROPEAN PATENT APPLICATION

(11) **EP 0 966 181 A2**
(43) Date of publication of application: **22.12.1999**
(21) Application number: 99300081.9
(22) Date of filing: 06.01.1999
(51) Int. Cl.: H05B 6/64, A47J 27/00

(54) **Auxiliary tray for use in a microwave oven**

(30) Priority: 16.06.1998 KR 9822617
(71) Applicant: SAMSUNG ELECTRONICS CO., LTD., Suwon-City, Kyungki-do (KR)
(72) Inventor: Kim, Dae Rae, Whasung-kun, Kyungki-do (KR)
(74) Representative: Geary, Stuart Lloyd

(57) **Abstract**

An auxiliary tray (140) for use in a microwave oven has a plurality of elastomeric rings (141, 142) on its underside. One or more of the rings (141, 142) have apertures (141a, 142a) so that the tray does not become stuck during cooking.

## Description

The present invention relates to an auxiliary tray for use in a micorwave oven, the tray having a ring-shaped elastomeric rib on its underside.

Microwave ovens are well-known cooking appliances.

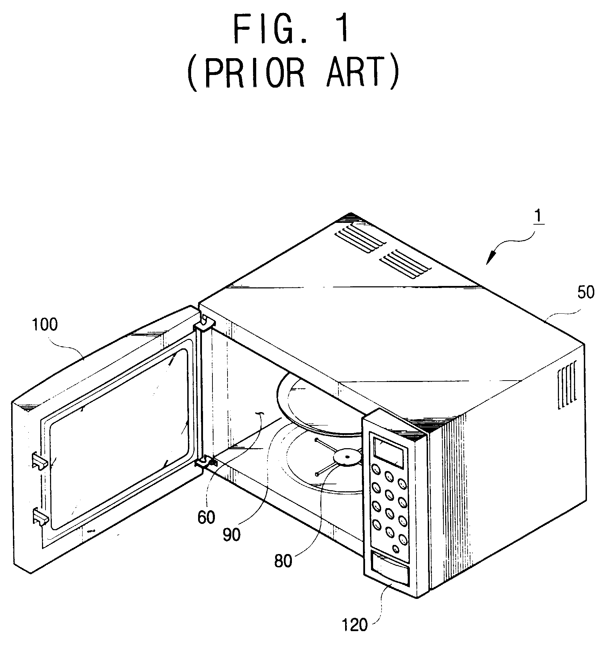

An example of a microwave oven is shown in Figure 1. The microwave oven 10 has a casing 50 forming a cooking chamber 60, a cooking chamber door 100, and a control panel 120 attached to the front of the casing 50. An electrical component compartment (not shown) is formed behind the control panel 120, and a plurality of electrical devices including a magnetron and a high-voltage transformer are installed in the component compartment. The magnetron generates microwaves, and the microwaves are radiated into the cooking chamber 60. Foodstuffs placed in the cooking chamber 60 is cooked by the microwaves.

A rotating tray 90 for carrying food to be cooked is installed in the cooking chamber 60. The rotating tray 90 is placed on a rotation member 80 having rollers, and the rotation member 80 is rotated by a motor (not shown) installed under the cooking chamber 60. The rotating tray 90 rotates continuously during cooking so that the food being cooked is evenly irradiated.

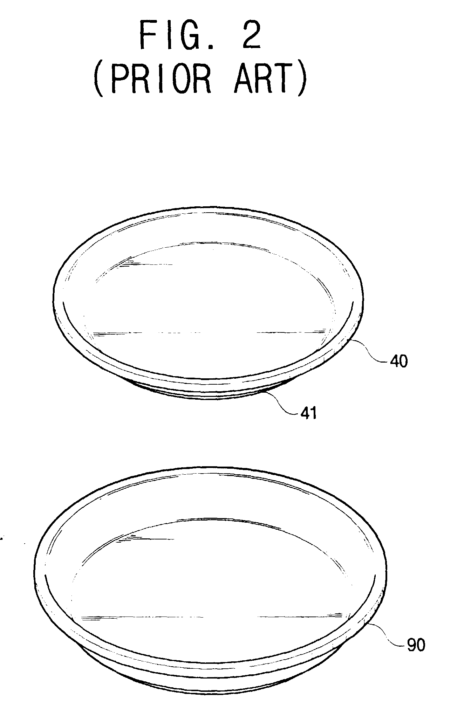

For the sake of convenience, an auxiliary tray 40, as shown in Figures 2 though 4 is placed on the rotating tray 90. The auxiliary tray 40 is formed with a size and a shape that mean that it can be accommodated in the rotating tray 90. The auxiliary tray 40 has a pair of ring-shaped ribs 41, 42 on its underside. The ribs 41, 42 serve to support the auxiliary tray 40 on the rotating tray 90. The auxiliary tray 40 is commonly manufactured from aluminium with its upper surface coated with teflon and its lower surface is with silicon. The user loads a food item, such as a pizza, on the auxiliary tray 40 and then places the auxiliary tray 40 on the rotating tray 90. Then, he operates the microwave oven 10 to cook the food item on the auxiliary tray 40. After the cooking is completed, the user takes the auxiliary tray 40 out of the cooking chamber 60.

While the food item is being cooked on the auxiliary tray 40, the spaces 45 and 46 formed between the ribs 41, 42 and the upper bottom of the rotating tray 90 are heated. Then, the pressure in the spaces 45, 46 becomes very low after the cooking has been completed. Consequently, the auxilary tray 40 becomes stuck to the rotating tray 90, making it hard to detach the auxiliary tray 40 from the rotating tray 90.

A tray according to the present invention is characterised in that the rib has an aperture through it. The tray may be in the form of, for example, a plate, a dish or a bowl.

A tray according to the present invention may have a plurality of elastomeric ribs on its underside, wherein each rib has an aperture through it.

Preferably, the ribs are concentric. However, the ribs need not be circular.

Preferably, the or each aperture comprise a gap in a rib. The apertures may alternatively be holes or the spaces between small axial projections from a rib.

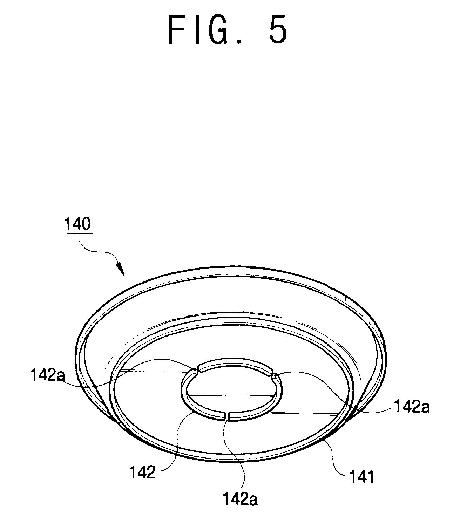

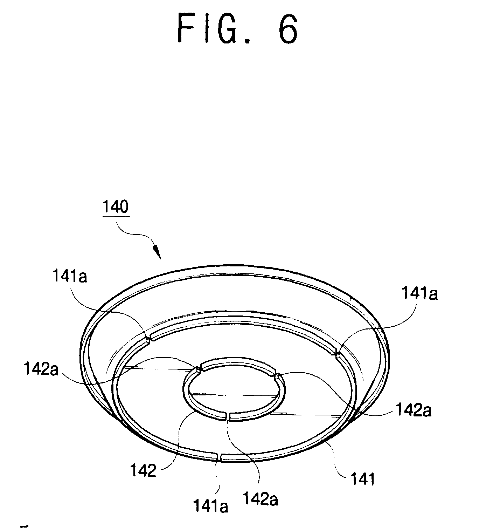

Embodiments of the present invention will now be described, by way of example, with reference to Figures 5 and 6 of the accompanying drawings, in which:-
Figure 1 is a perspective view of a microwave oven;
Figure 2 is a perspective view of the rotating tray shown in Figure 1 and an auxiliary tray;

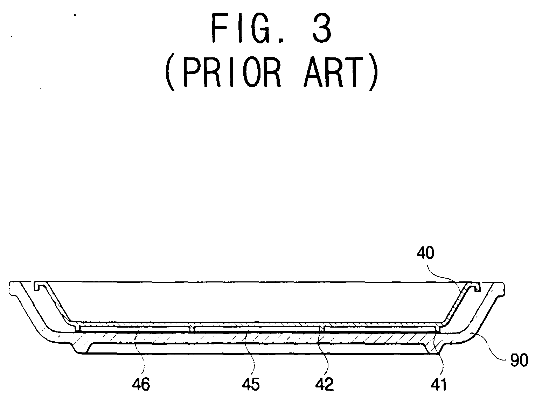

Figure 3 is a side sectional view of the rotating tray and the auxiliary tray placed on the rotating tray;

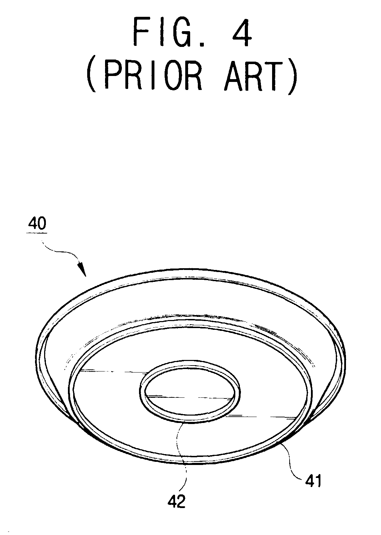

Figure 4 is a perspective view showing the bottom of a known auxiliary tray;
Figure 5 is a perspective view showing the bottom of a first auxiliary tray according to the present invention; and
Figure 6 is a perspective view showing the bottom of a seond auxiliary tray according to the present invention.

Referring to Figure 5, rotating tray rotated by a motor is installed in the cooking chamber of a microwave oven and the auxiliary tray 140 is placed on the rotating tray. The auxiliary tray 140 has a pair of ring-shaped ribs 141, 142 attached coaxially on its underside. The ribs 141, 142 serve to support the auxiliary tray 140 on the rotating tray. The auxiliary tray 140 is manufactured from aluminium with its upper surface coated with teflon and lower surface coated with silicon. The ribs 141, 142 are manufactured from rubber.

The inner rib 142 has three air vents 142a formed by cutting a part of the inner rib 142 away. The air vents 142a spaced apart by 120°. The air vents 142a open the space bounded by the inner rib 142, the top of the rotating tray and the bottom of the auxiliary tray 140.

Referring to Figure 6, the inner rib 142 has air vents 142a like those in the above-described embodiment, and the outer rib 141 also has air vents 141a.

The air vents 141a open the space bounded the outer rib 141, the inner rib 142, the top of the rotating tray and the bottom of the auxliliary tray 140.

Now, when a user places a food item, such as a pizza, on either of the auxiliary trays 140, places the auxiliary tray 140 on the rotating tray and cooks the food item, the auxiliary tray 149 does not become stuck to the rotating tray because the air vents 141a, 141b in the ribs 141, 142 mean that the air in the spaces within the broken rings 141, 142 remains at ambient pressure.

When a food item is placed on the auxiliary tray 140, the weight of the food item is mainly concentrated on the central area of the auxiliary tray 140, so gaps in the outer ring 141 are not necessary in all cases.

In the described embodiments of the present invention, the air vents 141a, 142a are formed by cutting away parts of the ribs 141, 142. However, the air vents 141a, 142a can be formed in a variety of manners and shapes. For example, if a protrusion protruding downward from a part of the ribs 141, 142 is formed, the ribs 141, 142 do not airtightly contact the top of the rotating tray. Moreover, the air vents can be formed by forming an aperture in a part of the ribs 141, 142.

## Claims

1. An auxiliary tray for use in a micorwave oven, the tray (140) having a ring-shaped elastomeric rib (142) on its underside, **characterised in that** the rib has an aperture (142a) through it.

2. A tray according to claim 1, having a plurality of elastomeric ribs (141, 142) on its underside, wherein each rib has an aperture through it.

3. A tray according to claim 2, wherein the ribs (141, 142) are concentric.

4. A tray according to claim 1, 2 or 3, wherein the or each aperture (141a, 142a) comprise a gap in a rib (141, 142).

5. An auxiliary tray placed on a tray in a microwave oven, the auxiliary tray for loading a foodstuff, the auxiliary tray comprising a ring-shaped rib formed on a lower bottom thereof, wherein the rib has at least one air vent formed on at least a part thereof, the air vent through which a space formed between the auxiliary tray and the tray communicates with an outer space.

6. The auxiliary tray as claimed in claim 5, wherein a pair of ring-shaped ribs are formed coaxially, and the ribs respectively have at least one air vent.
